Europäisches Patentamt

European Patent Office

Office européen des brevets

(11) Veröffentlichungsnummer: **0 092 704**
**B1**

(12) **EUROPÄISCHE PATENTSCHRIFT**

(45) Veröffentlichungstag der Patentschrift:
12.06.87

(21) Anmeldenummer: **83103351.9**

(22) Anmeldetag: **06.04.83**

(51) Int. Cl.⁴: **C 25 C 3/12,** C 25 C 7/02,
C 25 C 3/08, C 04 B 35/52,
C 04 B 35/00 //
H05B7/08, C21C5/52

(54) **Verwendung von temperatur- und korrosionsbeständigen gasdichten Materialien als Schutzüberzug für den Metallteil von Kombinationselektroden für die Schmelzflusselektrolyse zur Gewinnung von Metallen, sowie hieraus gebildete Schutzringe.**

(30) Priorität: **26.04.82 DE 3215537**

(43) Veröffentlichungstag der Anmeldung:
**02.11.83 Patentblatt 83/44**

(45) Bekanntmachung des Hinweises auf die Patenterteilung:
**12.06.87 Patentblatt 87/33**

(84) Benannte Vertragsstaaten:
**AT BE CH DE FR GB IT LI LU NL SE**

(56) Entgegenhaltungen:
**Die Akte enthält technische Angaben, die nach dem Eingang der Anmeldung eingereicht wurden und die nicht in dieser Patentschrift enthalten sind.**

(73) Patentinhaber: **C. CONRADTY NÜRNBERG GmbH & Co. KG, Grünthal 1-6, D-8505 Röthenbach a.d. Pegnitz (DE)**

(72) Erfinder: **Zöllner, Dieter H., Dr. rer. nat. Dipl.-Chem., Händelstrasse 19, D-8501 Schwaig b. Nürnberg (DE)**
Erfinder: **Zöllner geb. Möller, Christine, Dr. Dipl.-Chem., Händelstrasse 19, D-8501 Schwaig b. Nürnberg (DE)**
Erfinder: **Schieber, Franz, Chemie- Ing. (grad.), Finkengasse 94, D-8505 Röthenbach a.d. Pegnitz (DE)**
Erfinder: **Lauterbach- Dammler, Inge, Dr. Dipl.-Chem., Peter- Vischer- Strasse 15, D-8500 Nürnberg (DE)**
Erfinder: **Koziol, Konrad, Dipl.- Chem., Kirchhoffstrasse 16, D-8505 Röthenbach a.d. Pegnitz (DE)**

LIBER, STOCKHOLM 1987

## Beschreibung

Die Erfindung betrifft die Verwendung von temperatur- und korrosionsbeständigen gasdichten Materialien als Schutzüberzug für den Metallteil des mit dem unteren Abschnitt lösbar verbundenen oberen Abschnitts einer Anode für die Schmelzflußelektrolyse zur Gewinnung von Metallen, sowie solche Anoden.

Unter Schmelzflußelektrolysen sollen insbesondere Verfahren zur Gewinnung von Metallen, wie Aluminium, Magnesium, Natrium, Lithium, etc., verstanden werden, die sich aufgrund des negativen Potentials nicht aus wässrigen Lösungen abscheiden lassen. Der Einsatz von Kombinationselektroden, die aus einem Elektrodenhalter mit angefügtem Aktivteil bestehen, für den Betrieb bei der Schmelzflußelektrolyse ist bekannt. Der metallische Elektrodenhalter dient dabei nicht nur zur mechanischen Befestigung des Aktivteils, sondern auch als Stromzuführung. Weiterhin sind aus der DE-OS 2 425 136 bereits unverbrauchbare Anoden für die Schmelzflußelektrolyse bekannt, bei denen durch lokale Kühlung eine Schlackenschicht auf der ungeschützten Stromzuführung und der ungeschützten Anode gebildet wird oder die ungekühlte Anodenanordnung durch ein gegen den Elektrolyten beständiges, elektrisch isolierendes Material abgeschirmt wird.

Weiterhin ist aus der DE-OS 2 910 811 eine neue Stromzuleitereinrichtung für Elektroden, insbesondere für in einer korrosiven Salzschmelze eingetauchte Elektroden bekannt, die folgende Bestandteile aufweist:

ein durch die Ofen- bzw. Zellenwand bzw. -decke hindurchgehendes an beiden Enden offenes und in eine Bohrung der Elektrode satt einragendes Graphitrohr;

einen diesem Graphitrohr nachschiebbar angeordneten metallischen Stromzuleiter aus einem Metall, dessen Schmelzpunkt tiefer liegt als die Temperatur der Salzschmelze und das bei der Betriebstemperatur des Ofens bzw. der Zelle einen flüssigen Kontakt mit der Elektrode bildet;

ein das Graphitrohr umgebendes Schutzrohr, das an einem Ende in der Elektrode dicht eingebettet ist und am anderen Ende durch die Decke bzw. Wand durchgeführt ist und aus einem dichten, elektrisch nichtleitenden keramischen Material besteht, das unter den Arbeitsbedingungen stabil ist.

Diese Konstruktionen haben ebenso wie konstruktive Lösungen auf dem Gebiet der Elektroden für die Elektrostahlerzeugung den Nachteil, daß die Materialien aus Oxidkeramik oder refraktären Nitriden eine sehr geringe Wärmeleitfähigkeit und einen ungünstigen Elastizitätsmodul zeigen, so daß sie unter Belastung durch einen räumlichen oder zeitlichen Temperaturgradienten leicht reissen.

Weiterhin ist aus der GB-PS 1 415 305 (Alcoa) eine Stromzuführungseinrichtung für die Aluminiumproduktion bekannt, die aus einem metallischen Stromleiter mit einer Muffe aus einem chlorresistenten Material besteht. Als Material offenbart ist Graphit mit einer Schutzschicht aus pyrolytischem Graphit. Graphit und andere Kohlenstoffmaterialien werden aber von der Schmelze und den Elektrolyseprodukten so stark angegriffen, daß der hohe Graphitverbrauch eine kostengünstige Durchführung des Verfahrens behindert.

Aus der älteren EP-A-0 083 654 sind Beschichtungsmaterialien bekannt, die feuerfeste, harte Materialien und kohlenstoffhaltige Zemente umfassen. Diese Beschichtungsmaterialien können unter anderem für Kathodenmaterialien für Aluminiumzellen Anwendung finden. Hinweise auf den Einsatz solcher Materialien für die Anwendung von Anoden für die Schmelzflusselektrolyse ergeben sich aus dieser Druckschrift nicht.

Schliesslich sind regenerierbare formstabile Elektroden für Hochtemperaturanwendungen, insbesondere für die Schmelzflusselektrolyse aus der EP-A-0 022 921 der Anmelderin bekannt. Diese bekannten Elektroden sind aus einer Anzahl Rohren, Stäben und/oder Platten gebildet, welche jeweils eine Vorzugsrichtung übereinstimmend mit der Stromführungseinrichtung aufweisen. Die Rohre, Stäbe und Platten bestehen aus einem Verbundwerkstoff aus anorganischen, den elektrischen Strom leitenden Fasern und wenigstens einem elektrochemisch aktiven Material. Hinweise auf Kombinationselektroden, die als Anoden bei der Schmelzflusselektrolyse Anwendung finden und aus einem Metallschaft mit hieran anschliessendem Aktivteil gebildet sind, finden sich in dieser Druckschrift nicht. Es sind auch keine Massnahmen beschrieben, um metallische Stromzuführungteile solcher Elektroden in spezieller Weise zu schützen.

Der Erfindung liegt die Aufgabe zugrunde, Schutzüberzüge für den Metallteil von Kombinationselektroden für die Schmelzflußelektrolyse zur Gewinnung von Metallen zu schaffen, die bei hohen Standzeiten einen für den praktischen Elektrolysezellenbetrieb ausreichenden Schutz der Elektrode gewährleisten und gleichzeitig einen energetisch günstigen Betrieb der Elektrode gestatten, ohne daß die mechanische Handhabung einschließlich der Ein- und Ausführung der Elektrode in die Zelle behindert ist.

Diese Aufgabe wird durch die Verwendung von Materialien der eingangs genannten Art gelöst, die dadurch gekennzeichnet sind, daß ein Verbundmaterial aus einem Kohlenstoffanteil, der graphitische Strukturelemente enthält, sowie einem Anteil mit zumindest einer keramischen Komponente eingesetzt wird.

Unter dem Begriff "Kombinationselektroden" sollen im Rahmen der Erfindung Anoden verstanden werden, die in der Schmelzflusselektrolyse Anwendung finden. Sie bestehen üblicherweise aus

- einem oberen Abschnitt aus Metall, der eventuell eine Kühlvorrichtung einschliesst und zur Stromzuführung und -verteilung dient,

- separaten Schutzelementen für diesen oberen Abschnitt und

- einem unteren Abschnitt aus aktivem Elektrodenmaterial.

In dem Verbundmaterial ist der Kohlenstoffanteil im allgemeinen in einer Menge von etwa 20 bis 80 Gew.% enthalten, wobei die keramische Komponente den verbleibenden Rest der Beschichtung darstellt. Im Rahmen der Erfindung ist es besonders vorteilhaft, wenn das Kohlenstoffmaterial in einer Menge von 35 bis 60 Gew.% vorliegt, wobei ein speziell günstiger Bereich etwa im Rahmen von 40 bis 55 Gew.% liegt.

2

Neben dem Kohlenstoffmaterial und der keramischen Komponente kann das Verbundmaterial auch zusätzlich Bindemittel, Imprägnierungsmittel und ähnliche Hilfsstoffe enthalten-, die im allgemeinen bis zu etwa 15 Gew.% des Gesamtmaterials ausmachen können. Wenngleich solche zusätzliche Bindemittel, Imprägnierungsmittel und dergleichen nicht immer erforderlich sind, hat es sich je nach Wahl der Kohlenstoffkomponente und der keramischen Komponente doch häufig als zweckmäßig eiwiesen, Bindemittel und Imprägnierungsmittel in einer Menge von etwa 1 bis 9 Gew.%, bezogen auf das Gesamtmaterial, vorzusehen. Die Binde- und Imprägnierungsmittel können dabei zum Erhalt eines dichteren, porenfreieren und besser zusammenhaltenden Materials einer Einzelkomponente, z. B. des Kohlenstoffmaterials, oder aber zum Zweck einer günstigen Verbindung zwischen der Kohlenstoffkomponente und der keramischen Komponente dienen. Als Bindemittel und Imprägnierungsmittel kommen beispielsweise solche in Frage, die herkömmlich bei der Herstellung von Elektrographiten ausgehend von Premiumkoksen dienen, wobei z. B. Peche, Teere, Teerpech, Phenolharze, etc. angeführt sein sollen.

Das Verbundmaterial kann jedoch auch unter Verwendung keramischer Komponenten gebildet sein, die zumindest teilweise selbst Bindeeigenschaften besitzen, z. B. bildsame, hochfeuerfeste Tone etc..

Im Rahmen der Erfindung weist der Kohlenstoffanteil in dem Verbundmaterial graphitische Strukturelemente auf, die im allgemeinen etwa 25 bis 90 Gew.% des Kohlenstoffanteils ausmachen können. Im Regelfall werden günstige Ergebnisse dann erzielt, wenn der Anteil der graphitischen Strukturelemente in der Kohlenstoffkomponente im Bereich von 40 bis 80 Gew.%, bezogen auf die Kohlenstoffkomponente, liegt.

Im Rahmen der Erfindung bestehen je nach den Anforderungen, denen die Elektrode bei der Elektrostahlerzeugung ausgesetzt ist, verschiedenartige Möglichkeiten der Wahl der Kohlenstoffkomponente. So können die graphitischen Strukturelemente sowohl aus Naturgraphit als auch aus Elektrographit oder auch Gemischen hiervon gebildet sein. Die nichtgraphitischen Anteile der Kohlenstoffkomponente können von Anthrazit, Zechenkoks, Petrolkoks, Teerpechkoks, Ruß etc. herrühren und daher kann die Kohlenstoffkomponente beispielsweise ein Gemisch aus Graphit unterschiedlicher Herkunft mit Anthrazit, Koksen unterschiedlicher Spezifikation, etc., bilden.

Bei Einsatz von natürlichem Graphit sind solche Qualitäten zu bevorzugen, die frei von niedrigschmelzenden Anteilen von Verunreinigungen oder solchen Zusatzstoffen sind, die bei Sauerstoffzutritt bei hohen Temperaturen gasförmige Produkte bilden oder abgeben können, z. B. Pyrit, bei hoher Temperatur zersetzliche Karbonate, etc..

Im allgemeinen können Standzeitverlängerungen, bessere Wärmeübergangswerte und Thermoschock- und Thermostressresistenz und auch geringere Schlackenanhaftungen dann erreicht werden, wenn höhere Anteile an Graphit in dem Verbundmaterial vorliegen. Dies kann zum einen über die Art der Kohlenstoffkomponente und andererseits über deren Menge mitgesteuert werden.

Besonders günstige Schutzüberzüge im Rahmen der Erfindung enthalten bevorzugt etwa 30 bis 50 Gew.% graphitische Strukturelemente, bezogen auf das Gesamtgewicht des Verbundmaterials. Allerdings können, wie vorerwähnt, je nach Betriebsbedingungen, Art der Elektrode etc. häufig auch befriedigende Ergebnisse erhalten werden, wenn die Graphitanteile, bezogen auf das Verbundmaterial, außerhalb der angegebenen bevorzugten Grenzen liegen.

Die keramische Komponente kann im allgemeinen in einer Menge von etwa 20 bis 80 Gew.%, bezogen auf das Gewicht des Verbundmaterials, vorliegen, wobei Mengen im Bereich von 40 bis 65 Gew.% besonders günstige Ergebnisse gezeigt haben.

Im allgemeinen enthält das Verbundmaterial die Kohlenstoffkomponente sowie die keramische Komponente als Teilchenverbund oder Faserverbund, in möglichst homogener Verteilung. Hierdurch kann im Regelfall eine keramische "Matrix" erreicht werden, in die der Kohlenstoffanteil in gezielter Verteilung eingebettet ist. Hierdurch ergänzen sich die Hochtemperatureigenschaften beider Komponenten in günstiger Weise, wodurch besonders überraschend hohe Resistenz gegen Temperaturwechsel und mechanische Festigkeit der Materialien erreichbar sind. In Einzelfällen ist es allerdings auch möglich, bei der Herstellung des Verbundmaterials auf eine gezielte Inhomogenität der Einzelkomponenten innerhalb des Verbundmaterials hinzuarbeiten, wenngleich dies nur bei speziellen Anwendungszwecken in Frage kommt.

Das erfindungsgemäß zu verwendende Verbundmaterial kann auf verschiedenartigste Weise hergestellt werden, wobei im Regelfall übliche Methodiken zur Herstellung von Verbundmaterialien unter Beachtung der Eigenheiten der Hochfeuerfest- d.h. keramischen Komponenten und der Kohlenstoffkomponenten, anwendbar sind.

Eine typische Verfahrensweise zur Herstellung des Verbundmaterials besteht darin, daß die Ausgangsbestandteile, d.h. die Kohlenstoffkomponente sowie die keramische Komponente, gegebenenfalls unter Zufügung von Wasser und Bindemittel, vermischt, sodann verformt und dann gebrannt werden. Ein Zusatz von Wasser ist häufig günstig, da dies die Verknetung der Masse, bis sie ganz homogen ist, erleichtert.

Im Einzelfall kann sich je nach Art der Zufügung der keramischen Komponente sowie deren Menge auch eine Reifungsperiode anschließen, in der die Massen über Zeiträume von Stunden bis zu einigen Wochen, gegebenenfalls in einer Atmosphäre höherer Feuchtigkeit, sich selbst überlassen bleiben kann.

Nach der Vermischung, sowie gegebenenfalls der "Reifung", schließt sich im allgemeinen die Verformung des Materiales an, die beispielsweise über Verpressung, Verstampfung oder auch Vergießen erfolgen kann. Im Rahmen der Erfindung ist es besonders bevorzugt, den Schutzüberzug in der Art von losbar auf den Metallabschnitt der Kombinationselektrode aufsetzbaren Formstücken auszubilden. Als solche können beispielsweise Rohre, Rohrabschnitte, Ringe und deren Sektoren genannt werden. Diese einzelnen Formstücke können konstruktiv in spezieller Weise zum Erhalt einer besonders günstigen Abdeckung des Metallschaftes ausgebildet sein. Im Hinblick auf die konstruktive Ausbildung solcher lösbar aufgesetzter Formstücke wird auch auf die ältere deutsche Patentanmeldung der Anmelderin P 3 102 776.8 verwiesen.

Bezüglich der allgemeinen Konstruktion von Kombinationselektroden des hier beschriebenen Typs wird schließlich Bezug genommen auf die europäischen Anmeldungen 0 050 679, 0 050 680 und 0 050 681 der Anmelderin, aus denen sich der allgemeine Aufbau der Kombinationselektroden sowie verwendbare Aktivteile etc. ergeben.

Die Formgebung zu solchen lösbar aufsetzbaren Formteilen kann auch durch spezielle Techniken erreicht werden, wobei hierbei eine Vibrationsformgebung und Strangpressung zusätzlich erwähnt werden sollen.

Im Rahmen der Erfindung ist es besonders bevorzugt, wenn das Verbundmaterial die Kohlenstoffpartikel in überwiegend anisotroper Ausrichtung enthält. Eine bevorzugte Orientierung in Längsrichtung ist durch folgende Verfahren möglich: Strangpressen, kontinuierliche Vibration, isostatisches Pressen mit verschiebbarer Form, manuelle Verformung und Schleuderguß. Der Einsatz von z. B. derart gefertigtem Verbundmaterial, das die Kohlenstoffpartikel überwiegend in Längsrichtung enthält, ergibt bei paralleler Ausrichtung zur Elektrodenachse bessere Oxidations- und Korrosionsbeständigkeit, sowie gute Ablationseigenschaften.

Das erfindungsgemäß verwendete Verbundmaterial kann die Kohlenstoffpartikel aber auch in Querorientierung enthalten, was z. B. über Blockpressung, Stampfen, Plätschen, Kalt- und Heißisopressung, Vibration, Gießen und Spritzen erreicht wird. Besonders günstige Orientierungen, die zu erhöhter Wärmeleitfähigkeit und mechanischer Festigkeit des Formteils führen, werden durch Plätschen oder Vibration erzielt.

Nach einer bevorzugten Ausführungsform der Erfindung besitzt das Verbundmaterial eine Wärmeleitfähigkeit von weniger als 210 kJ/mhK.

Das Brennen der Verbundmasse erfolgt im allgemeinen bei Temperaturen bis zu 1600°C, vorzugsweise 1200 bis 1400°C, wobei bei etwa über 500°C liegenden Brenn- und Sintertemperaturen auf die Vermeidung von Frischluftzufuhr bzw. Luftzirkulation im allgemeinen geachtet wird. Im Einzelfall kann das Brennen auch in mehreren Etappen vorgenommen werden, wobei einer Brennstufe bei niedriger Temperatur gegebenenfalls eine bei höheren Temperaturen nachfolgen kann. Beispielsweise werden bei Verbundmaterialien aus Graphit und MgO eine Vorbrennstufe im Bereich von 900 bis 1400°C angewandt der je nach mengenmäßigem Anteil von MgO ein Nachbrennen bei höherer Temperatur folgen kann. Im allgemeinen ist es wünschenswert, dem Brennvorgang eine Vortrocknungsstufe bei erheblich niedriger Temperatur zum Austrieb eventuell noch vorhandener Feuchtigkeit voranzuschalten und die Temperatur zur Erreichung des Brennens nur über längere Zeiträume zu steigern.

Um das Schutzelement gasdicht zu machen, wird das Material bis zu einer Porosität von mindestens 90 %, bevorzugt über 95 %, Dichtgewicht gesintert.

Die in dem erfindungsgemäß verwendeten Verbundmaterialien enthaltende keramische Komponente kann aus einem breiten Spektrum hochfeuerfester Verbindungen gewählt werden. Im allgemeinen handelt es sich um refraktäre Oxide, Karbide und Nitride sowie um Gemische hiervon. Beispielhaft können z. B. Kombinationen aus Oxiden oder Silikaten von Zr, Al oder Mg bzw. Nitride von Ti, Si, Bor-Verbindungen von Ti oder Zr oder Karbide von Si, Zr oder Ti genannt werden. Als keramische Komponente im erfindungsgemäß verwendeten Verbundmaterial haben sich insbesondere Schamotte, Ton, Kaoline, Siliziumdioxid, Sillimanit, Al$_2$O$_3$, MgO, Sinterdolomit, Magnesium-Chromoxid-Erz, Forsterit, Siliziumkarbid, Siliziumnitrid, Zirkonoxide, Zirkonsilikat, Titanoxid, silikathaltiges Aluminiumtitan, Spinellen und Gemische hiervon als günstig erwiesen. Besonders bevorzugt hierunter ist der Einsatz feuerfester Tone, von MgO, Siliziumkarbid und -nitriden sowie silikathaltigen Aluminiumtitanaten.

Alternative Lösungen, verwenden Materialien, bei denen die keramische Komponente unter Mischoxiden von Aluminiumoxid, Siliziumnitrid, Zinkoxid oder Mullitmit ca. 15 % Zirkonoxid ausgewählt ist. Diese Oxidkeramiken zeichnen sich durch besonders geringe Sprödigkeit aus, was besonders bei den automatischen Krustenbrechvorrichtungen in modernen Aluminiumelektrolysen die Standzeiten der Oberflächenschutzelemente erhöht.

Bei einer erfindungsgemäßen Modifizierung der Oberflächenschutzelemente, die in der Verwendung von Mischoxiden des dotierten Zinnoxids mit Titanoxid oder Magnesiumoxid oder Aluminiumoxid oder Zirkonoxid besteht, ergeben sich besonders korrosionsbeständige Eigenschaften gegenüber den Elektrolytkomponenten.

Sofern es gewünscht ist, kann die keramische und/oder die Kohlenstoffkomponente zumindest teilweise in Faserform vorliegen, z. B. als Kaolinitfaser, Asbestfaser, Kohlenstoffaser, insbesondere C-Kurzfaser, etc.. Auch können den vorgenannten keramischen Komponenten Zusätze von Boroxiden und/oder hochfeuerfesten seltenen Edelmetallverbindungen zugefügt sein.

Die Kombination der keramischen Komponente sowie der Kohlenstoffkomponente nach Art und Menge sowie deren nachfolgende Verpressung und Sinterung wird bevorzugt derart gesteuert, daß das Verbundmaterial einen Wärmeausdehnungskoeffizienten von weniger als 15 x 10$^{-6}$/K besitzt. Erfindungsgemäß bevorzugt verwendete Verbundmaterialien besitzen einen Wärmeausdehnungskoeffizienten im Bereich von (2 - 12) x 10$^{-6}$/K.

Die erfindungsgemäß verwendeten Materialien haben ihre besondere Anwendung als lösbar auf den Metallschaft der Elektrode aufsetzbare Formteile, die beispielsweise Rohre, Ringe, Segmente oder Sektoren hiervon darstellen können. Die Formteile liegen nach einer bevorzugten Ausführungsform der Erfindung auf der

4

Elektrode auf bzw. sind hieran durch überdeckte Schraubverbindungen, Gewinde etc. aufgesetzt. Dabei ist es häufig besonders wichtig, daß zumindest der untere Teil des Metallschaftes der Elektrode, der in die Elektrolysezelle eingeführt wird, vollständig durch die erfindungsgemäß verwendeten Materialien abgedeckt ist. Auch sollte der äußere Schutzbereich der Formteile von leicht schmelzbaren Stützelementen bzw. Abstandshaltern frei sein.

Die erfindungsgemäß verwendeten Materialien haben ihre besondere Anwendung bei Kombinationselektroden, deren Metallschaft innen gekühlt ist. Die erfindungsgemäß verwendeten Materialien sind im Hinblick hierauf in spezieller Weise abgestimmt, da deren bevorzugter Bereich des Wärmeleitvermögens eine optimale Abführung der an den Schutzelementen auftretenden Wärme gestattet.

Im Rahmen der Erfindung werden auch Anoden für die Schmelzflußelektrolyse zur Gewinnung von Metallen, die aus einem oberen Abschnitt aus Metall, der eventuell eine Kühlvorrichtung einschließt und zur Stromzuführung und -verteilung dient, separaten Schutzelementen für diesen oberen Abschnitt und einem unteren Abschnitt aus aktivem Elektrodenmaterial gebildet sind, umfaßt, die dadurch gekennzeichnet sind, daß die separaten Schutzelemente einen Ring oder Ringsektor aus einem Verbundmaterial darstellen, der aus Kohlenstoff, der graphitische Strukturelemente enthält und einer keramischen Komponente gebildet ist.

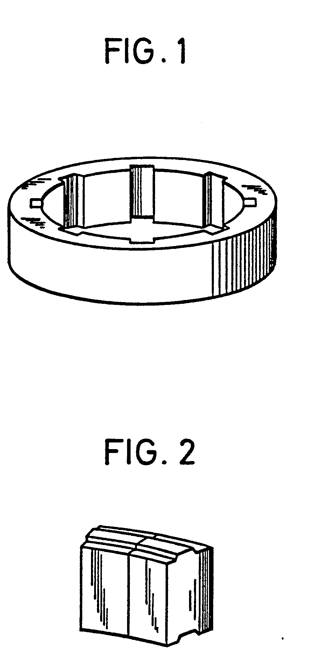

In der beigefügten Fig. 1 ist ein Abdeckungsring für eine solche Anode gezeigt, der in seiner Innenseite Führungen zur Aufsetzung an dem Metallabschnitt der Kombinationselektrode aufweist. In Fig. 2 ist das Segment bzw. der Sektor eines Schutzringes gezeigt, aus dem eine vollflächige Bedeckung des Metallschaftes durch Zusammenfügung mehrerer entsprechender Elemente erreicht werden kann. Diese können beispielsweise über ein nichtgezeigtes Innengewinde an der Anode befestigt sein.

Durch die Erfindung werden eine Reihe überraschender Vorteile erzielt. Die Schutzüberzüge vereinigen die gute Oxidations- bzw. Korrosionsbeständigkeit der keramischen Komponente mit den guten thermischen Eigenschaften des Graphits und erreichen dadurch sehr lange Standzeiten, da kein Verbrauch durch Bruch oder durch Oxidation eintritt. Sie sind weniger spröde als reine keramische Materialien, so daß sie den mechanischen Belastungen im Elektrolysebetrieb standhalten. Durch den Graphitanteil sind sie auch besser wärmeleitend, so daß sie weniger empfindlich gegen thermische Belastungen bei Inbetriebnahme beim Beschichen der Zelle, usw., sind. Die gleichen guten Eigenschaften werden auch durch die Bevorzugung von Materialien mit niedrigem thermischen Ausdehnungskoeffizienten erreicht. Der Verbrauch durch Oxidation ist praktisch vernachlässigbar. Durch die Ausbildung des Schutzüberzuges in lösbar aufgesetzten Formteilen ergibt sich schließlich eine wartungs- und reparaturfreundliche Konstruktion.

Die Erfindung wird nachstehend in Beispielen beschrieben, die jedoch nicht als Einschränkung aufzufassen sind:

## Beispiel 1

Es wurde eine Elektrode eingesetzt, deren oberer Abschnitt aus Kupfer bestand, das über ein System aus Vor- und Rücklaufkanal mit Wasser gekühlt wurde. An dem Kupferschaft war der untere Abschnitt aus Graphit über einen Graphitnippel angeschraubt.

Der in die Elektrolysezelle eingeführte Teil des Kupferschaftes war durch drei ineinandergefügte Ringe vollständig abgedeckt, deren unterster über ein Innengewinde mit dem unteren Teil des Kupferschaftes verschraubt war.

Versuche mit Kombinationsanoden der beschriebenen Art in schmelzflüssigen Kryolithelektrolyten haben gezeigt, daß der Ohm'sche Spannungsabfall bei einer Stromdichte von 10 kA/m$^2$ um 0,2 bis 0,3 V unter dem der üblichen Blockanoden liegt. Dieser Spannungsvorteil blieb bei noch andauernden Versuchen bereits über 3 Monate unverändert erhalten.

Das die Schutzringe ausbildende Verbundmaterial war aus 49 Gew.% Naturgraphit (aus Sri Lanka), 37 Gew.% natürlichem Ton (einer Zusammensetzung von ca. 56 % SiO, 33 % Al$_2$O$_3$, 1,5 % FeO, 0,9 % CaO + MgO, 1,4 % Alkali, Rest Feuchtigkeit), 6 % SiC und Rest Quarzsand gebildet.

Die Ausgangsmaterialien wurden trocken vermahlen und unter Zusetzung von Anmachwasser einige Stunden im Kollergang vermischt.

Hiernach wurde das Material bei Raumtemperatur eine Woche stehengelassen und sodann zu der gewünschten Ringform verpreßt. Die gefertigten Ringe wurden sodann zunächst bei ca. 110 bis 140° C getrocknet und dann langsam in einem Muffelofen im Bereich von ca. 1370° C gebrannt.

## Beispiel 2:

Das Verbundmaterial wurde in analoger Weise durch Homogenisieren, Formen, Trocknen und Brennen der folgenden Ausgangsmaterialien hergestellt:

| | |
|---|---|
| Zirkonoxid | 18 Gew.% |
| Sinterkorund | |
| Geschmolzenes $Al_2O_3$ | 43 Gew.% |
| Pechkoks | 22 Gew.% |
| Alabama-Graphit | 27 Gew.% |

**Beispiel 3:**

| | |
|---|---|
| Siliziumkarbid | 71 Gew.% |
| Elektrographit mit ca. 70 % Graphitstiukturelementen | 25 Gew.% |
| Rest Kohlenstoff (aus Bindemittel Teerpech) | |

**Beispiel 4:**

| | |
|---|---|
| MgO (elektrogeschmolzen) | 39 Gew.% |
| Alabama-Graphit | 20 Gew.% |
| Anthrazit | 31 Gew.% |
| Rest Magnesiumoxid-Magnesiumchlorid als Bindemittel | |

**Beispiel 5:**

| | |
|---|---|
| Aluminiumsilikat z.T. in Faserform ("Fiberfrax" | |
| Warenzeichen von The Carborundum Co., Niagare Falls, USA) | 36 Gew.% |
| Premium-Petrolkoks | 57 Gew.% |
| Phenol-Formaldehydharz | 7 Gew.% |

Die homogenisierten Materialien wurden mit etwas Wasser aufgeschlämmt und hiernach vakuumverpreßt. Nach einer Trocknung während 2 Stunden im Bereich von 170 bis 190°C wurde das Material im Bereich von 500 bis 600°C gebrannt.

**Beispiel 6:**

| | |
|---|---|
| $Al_2O_3$ | 39 Gew.% |
| $TiO_2$ | 28 Gew.% |
| Kaolin | 3 Gew.% |
| Magnesiumsilikat | 0,5 Gew.% |
| C-Kurzfasern | 11 Gew.% |
| Rest Petrolkoks aus Kohlenstoff (aus Bindemittel Teerpech) | |

Die aus den obigen Zusammensetzungen in analoger Weise hergestellten Schutzringe ermöglichten einen störungsfreien Elektrodenbetrieb bei gleichzeitig erreichbaren hohen Standzeiten.

**Beispiel 7**

| | |
|---|---|
| Zinnoxid | 50 Gew.% |
| Zirkonoxid | 7 Gew.% |
| TiO (aus Titansäureester) | 5 Gew.% |
| Naturgraphit | 30 Gew.% |
| Kohlenstoff aus Teerpech | 8 Gew.% |

Die Masse wird mit Polyviollösung aufgeschlämmt und 2 Stunden geknetet, mit 2000 kg/cm$^2$ isostatisch gepresst und 5 Stunden bei 1250°C gesintert.

**Patentansprüche**

1. Verwendung von temperatur- und korrosionsbeständigen gasdichten Materialien als Schutzüberzug für den Metallteil des mit dem unteren Abschnitt lösbar verbundenen oberen Abschnitts einer Anode für die Schmelzflußelektrolyse zur Gewinnung von Metallen, dadurch gekennzeichnet, daß ein Verbundmaterial aus einem Kohlenstoffanteil, der graphitische Strukturelemente enthält, und einem Anteil mit zumindest einer keramischen Komponente eingesetzt wird.

2. Verwendung nach Anspruch 1, dadurch gekennzeichnet, daß das Kohlenstoffmaterial in einer Menge von etwa 20 bis 80 Gew.% vorliegt und die keramische Komponente den verbleibenden Rest darstellt.

3. Verwendung nach Ansprüchen 1 und 2, dadurch gekennzeichnet, daß das Kohlenstoffmaterial in einer Menge von 35 bis 60 Gew.% vorliegt.

4. Verwendung nach Ansprüchen 1, 2 oder 3, dadurch gekennzeichnet, daß zusätzlich Bindemittel und Imprägnierungsmittel in einem Anteil von 1 bis 15 Gew.% enthalten sind.

5. Verwendung nach Ansprüchen 1, 2, 3 oder 4, dadurch gekennzeichnet, daß der Anteil der graphitischen Strukturelemente 25 bis 90 Gew.% des Kohlenstoffmaterials bildet.

6. Verwendung nach einem oder mehreren Ansprüchen, dadurch gekennzeichnet, daß die graphitischen Anteile aus Naturgraphit und/oder Elektrographit bestehen.

7. Verwendung nach einem oder mehreren Ansprüchen, dadurch gekennzeichnet, daß die nichtgraphitischen Anteile des Kohlenstoffanteils aus Anthrazit, Zechenkoks, Teerpechkoks und/oder Petrolkoks gebildet sind.

8. Verwendung nach Anspruch 1, dadurch gekennzeichnet, daß der gesamte Kohlenstoffanteil des Verbundmaterials aus Graphit besteht.

9. Verwendung nach Anspruch 8, dadurch gekennzeichnet, daß der Graphit Naturgraphit darstellt.

10. Verwendung nach Anspruch 1, dadurch gekennzeichnet, daß der Anteil an graphitischen Strukturelementen in dem Kohlenstoffanteil gering ist.

11. Verwendung nach Ansprüchen 1, 2 oder 3, dadurch gekennzeichnet, daß die keramische Komponente in einer Menge von 40 bis 65 Gew.% des Verbundmaterials vorliegt.

12. Verwendung nach einem oder mehreren Ansprüchen, dadurch gekennzeichnet, daß das Verbundmaterial die Kohlenstoffkomponente sowie die keramische Komponente als Teilchenverbund, Faserverbund, Schichtverbund im homogener Verteilung enthält.

13. Verwendung nach einem oder mehreren der vorhergehenden Ansprüche, dadurch gekennzeichnet, daß das Verbundmaterial durch Vermischen der Ausgangsbestandteile, gegebenenfalls unter Zufügung von Wasser und Bindemittel, Formen und Drennen unter Ausbildung einer Vorzugsrichtung der Kohlenstoffpartikel erzeugt ist.

14. Verwendung nach einem oder mehreren der vorhergehenden Ansprüche, dadurch gekennzeichnet, daß die keramische Komponente unter Schamotte, Ton, Kaolinen, Siliziumoxid, Sillimanit, $Al_2O_3$, MgO, Magnesium-Chromoxid-Erz, Forsterit, Siliziumkarbid, Siliziumnitrid, Zirkonoxiden, Zirkonsilikat, Titanoxid, silikathaltigem Aluminiumtitanat, Spinellen und Gemischen hiervon ausgewählt ist.

15. Verwendung nach einem oder mehreren der vorhergehenden Ansprüche, dadurch gekennzeichnet, daß die keramische Komponente unter Tantaloxid, Zinnoxid, dotiertem Zinnoxid und Mischoxiden, bestehend aus Zinnoxid mit Titanoxid oder Magnesiumoxid oder Aluminiumoxid oder Zirkonoxid oder Tantaloxid, ausgewählt ist.

16. Verwendung nach einem oder mehreren der vorhergehenden Ansprüche, dadurch gekennzeichnet, daß die keramische und/oder die Kohlenstoff-Komponente zumindest teilweise in Faserform vorliegt.

17. Verwendung nach einem oder mehreren der vorhergehenden Ansprüche, dadurch gekennzeichnet, daß die keramische Komponente einen Zusatz von Boroxid und/oder hochfeuerfesten seltenen Erden umfaßt.

18. Verwendung nach einem oder mehreren der vorhergehenden Ansprüche, dadurch gekennzeichnet, daß der Wärmeausdehnungskoeffizient des Verbundmaterials unter $5 \times 10^{-6}/K$ liegt.

19. Verwendung nach einem oder mehreren der vorhergehenden Ansprüche, dadurch gekennzeichnet, daß die keramische Komponente unter Mischoxiden von Aluminiumoxid, Siliziumnitrid, Zinkoxid oder Mullit mit ca. 15 % Zirkonoxid ausgewählt ist.

20. Verwendung nach einem oder mehreren der vorhergehenden Ansprüche, dadurch gekennzeichnet, daß das Verbundmaterial als Formteil ausgebildet ist.

21. Verwendung nach Anspruch 20, dadurch gekennzeichnet, daß das Formteil als Rohr, Ring oder Ringsektor vorliegt, das auf den Metallteil der Kombinationselektrode lösbar aufsetzbar ist.

22. Verwendung nach Ansprüchen 20 oder 21, dadurch gekennzeichnet, daß die Formteile den Metallteil, der in die Elektrolysezelle eingeführt wird, vollständig abdecken und der durch die Formteile gebildete äußere Schutzbereich von leicht schmelzbaren Stützelementen frei ist.

23. Verwendung nach einem oder mehreren der vorhergehenden Ansprüche, dadurch gekennzeichnet, daß das Verbundmaterial den Metallteil der Kombinationselektrode abdeckt, der innen gekühlt ist.

24. Verwendung nach einem oder mehreren der vorhergehenden Ansprüche, dadurch gekennzeichnet, daß das Verbundmaterial eine Wärmeleitfähigkeit von weniger als 210 kJ/mhK aufweist.

25. Verwendung nach einem oder mehreren der Ansprüche 1 bis 24 dadurch gekennzeichnet, daß das Verbundmaterial die Kohlenstoffpartikel in überwiegend anisotroper Ausrichtung enthält.

26. Anode für die Schmelzflußelektrolyse zur Gewinnung von Metallen, die aus einem oberen Abschnitt aus Metall, der eventuell eine Kühlvorrichtung einschließt und zur Stromzuführung und -verteilung dient, separaten

7

Schutzelementen für diesen oberen Abschnitt und einem unteren Abschnitt aus aktivem Elektrodenmaterial gebildet ist, dadurch <u>gekennzeichnet</u>, daß die separaten Schutzelemente einen Ring oder Ringsektor aus einem Verbundmaterial darstellen, der aus Kohlenstoff, der graphitische Strukturelemente enthält und einer keramischen Komponente gebildet ist.

**Revendications**

1. Utilisation de matériaux imperméables aux gaz et résistant à la température et à la corrosion, en tant que revêtement protégeant la partie métallique de la partie supérieure, amoviblement assemblée à la partie inférieure, d'une anode d'électrolyse ignée pour l'obtention de métaux, caractérisée par l'emploi d'un matériau composite constitué d'une part de carbone contenant des éléments à structure graphitique et d'une part comportant au moins un composant céramique.

2. Utilisation selon revendication 1, caractérisée en ce que le matériau à base de carbone est présent en quantité pondérale de l'ordre de 20 à 80 %, et le composant céramique représente la part restante.

3. Utilisation selon revendications 1 et 2, caractérisée en ce que le matériau à base de carbone est présent en quantité pondérale de 35 à 60 %.

4. Utilisation selon revendications 1, 2 ou 3, caractérisée en ce qu'il y a, en plus, des liants et des agents d'imprégnation, contenus dans une proportion pondérale de 1 à 15 %.

5. Utilisation selon revendications 1, 2, 3 ou 4, caractérisée en ce que la part des éléments à structure graphitique constitue, en poids, 25 à 90 % du matériau à base de carbone.

6. Utilisation selon une ou plusieurs revendications, caractérisée en ce que les parts graphitiques sont constituées de graphite naturel et/ou d'électrographite.

7. Utilisation selon une ou plusieurs revendications, caractérisée en ce que les parts non graphitiques de la part de carbone sont constituées d'anthracite, de coke métallurgique, de coke de brai et/ou de coke de pétrole.

8. Utilisation selon revendication 1, caractérisée en ce que la totalité de la part de carbone du matériau composite est en graphite.

9. Utilisation selon revendication 8, caractérisée en ce que le graphite est du graphite naturel.

10. Utilisition selon revendication 1, caractérisée en ce que la part des éléments à structure graphitique dans la part de carbone est faible.

11. Utilisation selon revendications 1, 2 ou 3, caractérisée en ce que le composant céramique du matériau composite est présent en quantite pondérale de 40 à 65 %.

12. Utilisation selon une ou plusieurs revendications, caractérisée en ce que le matériau composite contient les composants carbone et céramique en répartition homogène, sous forme d'aggloméré de particules, d'aggloméré de fibres, de stratifié.

13. Utilisation selon une ou plusieurs des revendications précédentes, caractérisée en ce que le matériau composite est produit par mélange des constituants initiaux, éventuellement avec addition d'eau et de liant, et par moulage et cuisson, cela avec orientation des particules de carbone dans une direction préférentielle.

14. Utilisation selon une ou plusieurs des revendications précédentes, caractérisée en ce que le composant céramique adopté est constitué par les matières suivantes, éventuellement mélangées: chamotte, argile, kaolin, oxyde de silicium, sillimanite, $Al_2O_3$, MgO, minerai d'oxyde de chrome et de magnésium forstérite, carbure de silicium, nitrure de silicium, oxydes de zirconium, silicate de zirconium, oxyde de titane, titanate d'aluminium siliceux, spinelles.

15. Utilisation selon une ou plusieurs des revendications précédentes, caractérisée en ce que le composant céramique est choisi parmi: oxyde de tantale, oxyde d'étain, oxyde d'étain dopé et oxyde; mixtes constitués d'oxyde d'étain avec de l'oxyde de titane ou de l'oxyde de magnésium ou de l'oxyde d'aluminium ou de l'oxyde de zirconium ou de l'oxyde de tantale.

16. Utilisation selon une ou plusieurs des revendications précédentes, caractérisée en ce que le composant céramique et/ou le composant carbone est présent, au moins en partie, sous forme de fibres.

17. Utilisation selon une ou plusieurs des revendications précédetes, caractérisée en ce que le composant céramique comporte de l'oxyde de bore et/ou des terres rares hautement réfractaires, en tant qu'additifs.

18. Utilisation selon une ou plusieurs des revendications précédentes, caractérisée en ce que le coefficient de dilatation du matériau composite est inférieur à $15 \times 10^{-6}$/K.

19. Utilisation selon une ou plusieurs des revendications précédentes, caractérisée en ce que le composant céramique est choisi parmi des oxydes mixtes comportant de l'oxyde d'aluminium, du nitrure de silicium, de l'oxyde de zinc ou de la mullite avec environ 15 % d'oxyde de zirconium.

20. Utilisation selon une ou plusieurs des revendications précédentes, caractérisée en ce que le matériau composite est réalisé sous forme de pièce moulée.

21. Utilisation selon revendication 20, caractérisée en ce que la pièce moulée a la forme d'un tube, d'un anneau ou d'un secteur d'anneau, pouvant être amoviblement placé sur la partie métallique de l'électrode combinée.

22. Utilisation selon revendications 20 ou 21, caractérisée en ce que les pièces moulées recouvrent complètement la partie métallique introduite dans la cellule d'électrolyse, et la zone protectrice extérieure formée par les pièces moulées est exempte d'éléments de support facilement fusibles.

23. Utilisation selon une ou plusieurs des revendications précédentes, caractérisée en ce que le matériau composite recouvre la partie métallique, refroidie intérieurement, de l'électrode combinée.

24. Utilisation selon une ou plusieurs des revendications précédentes, caractérisée en ce que le matériau composite présente une conductibilité thermique inférieure à 210 kJ/mhK.

25. Utilisation selon une ou plusieurs des revendications 1 à 24, caractérisée en ce que le matériau composite contient les particules de carbone en orientation principalement anisotrope.

26. Anode d'électrolyse ignée pour l'obtention de métaux, constituée d'une partie supérieure en métal comportant éventuellement un dispositif de refroidissement et servant à l'amenée et à la répartition de courant, et d'éléments protecteurs separés qui protègent cette partie supérieure, ainsi que d'une partie inférieure en matière d'électrode active, caractérisée en ce que les éléments protecteurs séparés constituent un anneau ou un secteur d'anneau en un matériau composite qui est formé de carbone contenant des éléments à structure graphitique et d'un composant céramique.

## Claims

1. Use of temperature and corrosion-resistant gas-tight materials as a protective coating of the metal part of the upper section of an anode for the production of metals by fusion electrolysis which is removably attached to the lower section thereof, characterized in that a composite material comprising a carbon component containing structural elements of graphite and a component containing at least one ceramic component is used.

2. Use according to claim 1 characterized in that the carbon component is present in an amount of about 20 to 80 % by weight and the ceramic component forms the remainder of the material.

3. Use according to claims 1 and 2 characterized in that the carbon component is present in an amount from 35 to 60 % by weight.

4. Use according to claim 1, 2 or 3 characterized in that binding agents and impregnating agents in a proportion of 1 to 15 % by weight are additionally present.

5. Use according to claims 1, 2, 3 or 4 characterized in that the proportion of the carbon component having graphite structural elements is 25 to 90 % by weight.

6. Use according to any of claims 1 to 5 characterized in that the graphite components consist of natural and/or electro graphite.

7. Use according to any of claims 1 to 6 characterized in that the non-graphite component of the carbon component is anthracite, furnace coke, coal tar pitch coke and/or petroleum coke.

8. Use according to claim 1 characterized in that all the carbon component of the composite material comprises graphite.

9. Use according to claim 8 characterized in that the graphite is natural graphite.

10. Use according to claim 1 characterized in that the proportion of the carbon component having graphite structural elements is low.

11. Use according to claims 1, 2 or 3 characterized in that the ceramic component is present in an amount of 40 to 65 % by weight of the composite material.

12. Use according to any of claims 1 to 11 characterized in that the composite material contains the carbon component as well as the ceramic component as a particle composite, fibre composite or interlaminar composite in homogeneous distribution.

13. Use according to any of claims 1 to 12 characterized in that the composite material is produced by mixing of the starting components, if necessary with addition of water and binding agent, molding and firing with orientation of the carbon particles into a preferred direction.

14. Use according to any of claims 1 to 13 characterized in that the ceramic component is selected from fire clay, clay, kaolin, silicon dioxide, sillimanite, $Al_2O_3$, MgO, magnesium-chromium-oxide ore, forsterite, silicon carbide, silicon nitride, zirconium oxides, zirconium silicate, titanium oxide, silicate-containing aluminium titanate or spinels and mixtures thereof.

15. Use according to any of claims 1 to 15 characterized in that the ceramic component is selected from tantalum oxide, tin oxide, doped tin oxide, and mixed oxides comprising tin oxide with titanium oxide, magnesium oxide, aluminium oxide, zirconium oxide or tantalum oxide.

16. Use according to any of claims 1 to 15 characterized in that the ceramic and/or carbon component is present at least partially in fibre form.

17. Use according to any of claims 1 to 16 characterized in that the ceramic component has an additive of boron oxide and/or highly refractive rare earths.

18. Use according to any of claims 1 to 17 characterized in that the coefficient of thermal expansion of the composite material is less than $15 \times 10^{-6}$/K.

19. Use according to any of claims 1 to 18 characterized in that the ceramic component is selected from mixed oxides of aluminium oxide, silicon nitride, zinc oxide or mullite with about 15 % zirconium oxide.

20. Use according to any of claims 1 to 19 characterized in that the composite material is shaped to be a molded part.

21. Use according to claim 20 characterized in that the molded part is a tube, ring or ring sector which can be removably attached to the metal portion of the combination electrode.

22. Use according to claims 20 or 21 characterized in that the molded parts wholly cover the metal portion which is inserted into the electrolysis cell and in that the outer protective area formed by the molded parts is free of easily fusible support materials.

23. Use according to any of claims 1 to 22 characterized in that the composite material covers the metal portion of the combination electrode which is internally cooled.

24. Use according to any of claims 1 to 23 characterized in that the composite material has a heat conductivity of less than 210 kJ/mhK.

25. Use according to any of claims 1 to 24 characterized in that the composite material contains the carbon particles in predominantly anisotropic alignment.

26. Anode for the production of metals by fusion electrolysis comprising an upper section of metal, which may include a cooling device and which supplies and distributes current, separate protective elements for this upper section and a lower section of active electrode material, characterized in that the separate protective elements are a ring or ring sector of composite material which comprises carbon having graphite structural elements, and a ceramic component.

# FIG. 1

# FIG. 2